# EUROPEAN PATENT APPLICATION

(11) **EP 2 409 568 A1**
(43) Date of publication of application: **25.01.2012**
(21) Application number: 10170019.3
(22) Date of filing: 19.07.2010
(51) Int. Cl.: A01N 25/02, A01N 53/00, A01N 43/70, A01N 43/653, A01N 43/40, A01N 37/22, A01N 33/18

(54) **Agrochemical formulation composition**

(71) Applicant: HUNTSMAN INTERNATIONAL LLC, Salt Lake City, Utah 84108 (US)
(72) Inventor: The designation of the inventor has not yet been filed
(74) Representative: Van Steenlandt, Wim August Maria

(57) **Abstract**

The invention relates to an agrochemical formulation composition. The agrochemical formulation composition comprising at least one agrochemical active component and a solvent, which solvent comprises one or more dialkyl carbonates of the formula CO(ORₐ)(OR_{b}), each of Rₐ and R_{b} being a linear or branched alkyl group of 3 to 6 carbon.

## Description

The present invention relates to agrochemical formulation compositions, i.e. formulation compositions of agrochemical active components comprising a solvent.

Agrochemical active components (sometimes referred to as agrochemical active ingredients) are often solid particles, crystal-like particles or oily liquids, which difficultly or even do not disperse in water, but which are to be brought into aqueous suspension for its final use. These agrochemical active ingredients, such as herbicides, pesticides, insecticides, and alike are first dissolved in a water immiscible solvent. Optionally surfactants are added, before the solution is emulsified in water. The solution of the active ingredient in the solvent is also used for the convenience of e.g. transportation, storage and/or dosing with water.

Such an agrochemical active ingredient when dissolved in a water immiscible solvent is referred to as an Emulsifiable Concentrate Formulation (EC).

Sometimes, some water is already added to the formulation, pre-forming an emulsion in water. This is referred to as Emulsions in water (EW). A special type ofEW are so-called micro-emulsions (ME), where the droplets of water immiscible solvent with active components are so small that light is not scattered, providing a water-clear or translucent liquid.

Solvents often used to provide EC or EW include aromatic hydrocarbons, such as SOLVESSO® solvents of ExxonMobil, paraffinic hydrocarbons such as EXXSOL® solvents of ExxonMobil, cyclic hydrocarbons such as cyclohexanone and isophorone and ester solvents such as methyloleate and EXXATE® solvents of ExxonMobil. These solvents often have the disadvantage that they exhibit significant toxicity to the users exposed to it, being highly volatile and/or having a flashpoint causing them to be considered highly flammable.

More recently used solvents showing less toxicity and/or flammability are dibasic ester (usually methyl esters) of long chain di-acids ranging from C8-C16 carbon units, fatty acid amide solvents such as dimethylamide and morpholineamide derivatives of C6-C16 fatty acids, and mono-alkylene carbonates such as ethylene carbonate, propylene carbonate and butylene carbonates. However the solvability of active components in these solvents may be limited or not sufficient. Seeing the difficulty to purify these solvents, their price is also typically high. A further disadvantage of the mono-alkylene carbonates, typically with short chain alkylenes, is their solubility in water.

However, there is still a need for a solvent which meets the requirements of today's agrochemical practice to a further extent.

According to the first aspect of the present invention, an agrochemical formulation composition is provided.

Such agrochemical dispersion meets the requirements of today's agrochemical practice to a further extent.

The agrochemical formulation composition comprises at least one agrochemical active component and a solvent, which solvent comprises one or more dialkyl carbonates of the formula CO(ORₐ)(OR_{b}), each of Rₐ and R_{b} being a linear or branched alkyl group of 3 to 6 carbon.

The agrochemical formulation compositions according to the present invention are suitable to be used to provide an aqueous emulsion by emulsifying the agrochemical formulation composition with water or alike. The dialkyl carbonates of the formula CO(ORₐ)(OR_{b}), each of Rₐ and R_{b} being a linear or branched alkyl group of 3 to 6 carbon are poor or even not water miscible.

Often alkylene carbonates such as propylene carbonate (sold as Jeffsol ® AG-1555 from Huntsman, USA) are used as solvents. Though dialkyl carbonates in general are known as solvents, such as from WO0217722A2, it was found that the use of one or more dialkyl carbonates of the formula CO(ORₐ)(OR_{b}), each of Rₐ and R_{b} being a linear or branched alkyl group of 3 to 6 carbon as solvent for agrochemical active components, has several advantages occurring simultaneously, in particular when the solvent consists of one or more such dialkyl carbonates.

It was noticed that a significant amount of certain active ingredients could be brought into solution, in particular when using dialkyl carbonates with two alkyl groups, each comprising 3 or 4 carbons. This is of advantage since a higher concentration of active components can be brought into the solution. When the agrochemical formulation composition is further used and emulsified in water or aqueous medium, again a higher concentration of active components can be provided in the emulsion.

It was also noticed that the agrochemical formulation compositions as subject of the present invention have a sufficiently high flash point to meet the requirements of today's agrochemical practice , in particular when using dialkyl carbonates with two alkyl groups, each comprising 4, 5 or 6 carbons.

Hence the best performance may be obtained by using CO(ORₐ)(OR_{b}), each of Rₐ and R_{b} being a linear or branched alkyl group of 4 carbon atoms, i.e. dibutylcarbonate, either using one of the dibutylcarbonate isomers in pure or substantially pure form, or mixtures of isomers of this dibutylcarbonate.

An other advantage of the agrochemical formulation compositions according to the present invention is that, when the agrochemical formulation composition is further blended with water to provide a fit-for-use emulsion or dispersion, the dialkyl carbonates will prevent the active component or components to crystallize, avoiding a decay of the concentration of active ingredient provided in the emulsion.

Further advantages of the agrochemical dispersion according to the present invention are that the solvent of the agrochemical dispersion may show a low toxicity, is not considered as a volatile organic compound(VOC), is hardly or even not bio-accumulative and shows a good biodegradability, its degradation substantially resulting in the corresponding alcohols RₐOH and R_{b}OH and CO₂, with substantially no decomposition into the corresponding glycol and acid.

Most preferably, the flashpoint of the dialkyl carbonates of the formula CO(ORₐ)(OR_{b}), is above 61 deg C. It was noticed that several dialkyl carbonates of the formula CO(ORₐ)(OR_{b}) have an acceptable toxicity profile, e.g. low acute oral and skin toxicity and can be classified as mild skin and eye irritants. These profiles can be tested using standard internationally accepted tests provided by the organization for economic cooperation and development (also known as the OECD).

Several dialkyl carbonates of the formula CO(ORₐ)(OR_{b}) do not appear to have phytotoxic properties.

A further advantage of the dialkylcarbonates used, is their compatibility with construction materials used in spraying equipment. The dialkylcarbonates do not tend to corrode the construction materials.

According to some embodiments of the present invention, Rₐ and R_{b} may be identical.

Dialkyl carbonates of the formula CO(ORₐ)(OR_{b}) with two identical alkyl groups are easier to make, hence can be provided in a more economical manner, and can be provided with significant high purity.

Preferably dipropylcarbonate, dibutylcarbonate isomers and dipentylcarbonate isomers are used, including alkyl isomers. Alternatively dialkylcarbonates with two different alkyl groups having a number of carbons in the range of 3 to 6 may be used.

Most preferred, Rₐ and R_{b} are butyl- or propyl- groups. Rₐ and R_{b} may be n-butyl, iso-butyl, sec-butyl or t-butyl groups. n-butyl groups are preferred. Rₐ and R_{b} may be n-propyl or iso-propyl groups. n-propyl groups are preferred.

Various isomers of the same dialkyl carbonate may be used simultaneously.

It was found that the dialkylcarbonates used in the composition according to the invention, having two alkyl chains having 3 to 6 carbons, provide improved solubility for a substantial number of active ingredients of various desired polarities.

According to some embodiments of the present invention each of Rₐ and R_{b} may be a butyl group.

Both Rₐ and R_{b} may be n-butyl, iso-butyl, sec-butyl or t-butyl groups. Both Rₐ and R_{b} being an n-butyl group is preferred.

For all alkyl groups having more than 3 carbons, the n-type isomer is preferred.

According to some embodiments of the present invention the solvent may provide at least 10 w% of the agrochemical formulation composition.

Unless otherwise specified, "w% of a component or group of components in the agrochemical formulation composition" means the weight of the specific component or the group of components as present in the agrochemical formulation composition over the total weight of the agrochemical formulation composition.

Preferably, the solvent provides 10 w% to 85 w% of the agrochemical formulation composition, more preferred 20 w% to 80 w%, such as 30 w% to 50 w%.

The one or more dialkyl carbonates of the formula CO(ORₐ)(OR_{b}), each of Rₐ and R_{b} being a linear or branched alkyl group of 3 to 6 carbon preferably provides at least 30 w% of the solvent used in the agrochemical formulation composition, more preferred between 30 w% and 70 w% of the solvent. Unless otherwise specified, "w% of a component or group of components in the solvent" means the weight of the specific component or the group of components as present part of the solvent over the total weight of the solvent.

The solvent present in the agrochemical formulation composition, in particular for EC or EW formulations, typically is to be combined with amounts of active components such that no crystallization of the active component is observed in a range of -5 deg C to 54 deg C.

The active component or components may provide 10 to 70 w% of the agrochemical formulation composition. More preferred, the active component provides 10 w% to 60 w%, or even 10 w% to 60 w% of the agrochemical formulation composition. Active components may e.g. be tebuconazole, ametryn, trifluralin, pendimethalin, permethrin, 2,4-D acid, triadimenol, imidacloprid, epoxiconazole, chlorothalonil, diflufenican, bifenthrin, cypermethrin, fluroxystroin, boscalid, diflyfenican, metolachlor and sulphonyl urea components such as nicosulfuron and metsulfuron.

Other components present in the agrochemical formulation composition may be surfactants, emulsifiers, stabilizers, anti-oxidants, corrosion inhibitors, activators, wetting agents, dyes, adjuvants and alike. These other components may typically provide 3 w% to 20 w% of the agrochemical formulation composition.

Examples of emulsifiers are, without being restricted to, anionic surfactant emulsifiers, e.g. emulsifiers containing salts of dodecylbenzene sulphonate , e.g. Ca-salts or amine salts, and sulphonates of other C11-C16 alkylbenzenes, alkylether sulphates, alkylphenoletherphosphates and ester phosphates; non-ionic surfactants such as alkoxylated alcohols and alkylphenols, ethoxylated fatty acids, ethoxylated vegetable oils, e.g. ethoxylated castor oil, fatty acid esters, e.g. of sorbitol, and their ethoxylated derivatives, ethoxylated amines, and condensates of glycerol; and catanionic emulsifiers such as a cationic amine, optionally in combination with an alkylsulphonate or ether sulphonate or ether phosphate.

According to some embodiments of the present invention, the solvent may comprise at least one other component different from said one or more dialkyl carbonates of the formula CO(ORₐ)(OR_{b}), each of Rₐ and R_{b} being a linear or branched alkyl group of 3 to 6 carbon.

Other components of the solvent, also referred to as co-solvent or co-solvents, may be monoalkylene carbonates, such as ethylenecarbonate (EC), propylenecarbonate (PC) and/or butylenecarbonate (BC). Also other co-solvents like dimethylsulfoxide (DMSO), cyclohexanone, short chain alcohols such as 2-ethylhexanol and n-butanol, n-alkylpyrrolidones, fatty acid dimethyl esters, fatty acid esters, dibasic esters, aromatic hydrocarbons and/or aliphatic hydrocarbons, one or more dimethylamides, such as C8-dimethylamide, C10-dimethylamide, C12-dimethylamide, ethylene glycol, propylene glycol, polyalkylene glycols and combinations thereof. Other co-solvents may be aromatic hydrocarbons, such as SOLVESSO® solvents of ExxonMobil, paraffinic hydrocarbons such as EXXSOL® solvents of ExxonMobil, cyclic hydrocarbons such as cyclohexanone and isophorone and ester solvents such as methyloleate and EXXATE® solvents of ExxonMobil.

The molar ratio of dialkyl carbonates of the formula CO(ORₐ)(OR_{b}), each of Rₐ and R_{b} being a linear or branched alkyl group of 3 to 6 carbon to the co-solvent may be in the range of 30/70 to 70/30.

According to some embodiments of the present invention, the solvent may comprise at least two dialkyl carbonates of the formula CO(ORₐ)(OR_{b}), each of Rₐ and R_{b} being a linear or branched alkyl group of 3 to 6 carbon.

According to some embodiments of the present invention, the one or more dialkyl carbonates of the formula CO(ORₐ)(OR_{b}), each of Rₐ and R_{b} being a linear or branched alkyl group of 3 to 6 carbon may have a molar mass of less than 250 g/mol.

More preferred, the molar mass of the dialkyl carbonates is less than or equal to 200 g/mol.

According to a further aspect of the present invention, the agrochemical active component may be any agrochemical active component used in the art, typically herbicides, pesticides, insecticides, plant growth regulators, molluscides, nematocides, acaricides and alike.

It was found that the solvents are in particular suitable to dissolve polar active components, which are however not sufficiently polar to show a significant water solubility.

Such agrochemical active components are e.g. tebuconazole, ametryn, trifluralin, pendimethalin, permethrin, 2,4-D acid, triadimenol, imidacloprid, epoxiconazole, chlorothalonil, diflufenican, bifenthrin, cypermethrin, fluroxystroin, boscalid, diflyfenican, metolachlor and sulphonyl urea components such as nicosulfuron and metsulfuron.

Other ingredients of the agrochemical formulation composition may be the typically known ingredients.

According to a further aspect of the present invention, a method for using said agrochemical formulation composition is provided. The method to use the agrochemical formulation composition according to the present invention comprises the steps of
o providing an agrochemical formulation composition according to the first aspect of the present invention
o emulsifying said agrochemical formulation composition with water to provide an agrochemical applicable liquid;
o contacting said an agrochemical applicable liquid, i.e. the emulsion in water made by diluting the formulation made according to the first aspect of the present invention, with an agricultural substrate.

Typically, 5 to 5000 litres of water is added per litre of agrochemical formulation composition according to the first aspect of the present invention.

The agrochemical applicable liquid may be used for spraying, e.g. as foliar sprays, sprays to be applied to plants shoots, or even as spray for treating soil. Alternatively, the formulations according to the present invention may be used as liquids to be topically applied to animals.

The agrochemical formulation composition according to the first aspect of the present invention may be an EC formulation, wherein typically the active component is present in an amount close to the desired level , i.e. the amount of active ingredient per litre of the sprayable substance, prepared by adding water or liquid to the agrochemical formulation composition. Surfactant emulsifiers may be added, typically in the range of 3 to 20%w/w, as well as co-solvents.

The EC formulation as set out above may be used to provide an EW formulation. Water may be added to the EC formulation, or the EC formulation may be added to water under conditions of high shear mixing to form a stable emulsion. The droplets of the emulsion may be so small that a micro-emulsion (ME) is provided.

Alternatively the formulation may be a dispersion concentrate (DC), where the active component is dissolved in the solvent in such an amount that, when the formulation is combined with water, the amount of active components in the resulting agrochemical applicable liquid exceeds the water soluble level of the active component in water.
Additional surfactant dispersion stabilizers may be added.

The independent and dependent claims set out particular and preferred features of the invention. Features from the dependent claims may be combined with features of the independent or other dependent claims as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

In the various embodiments, the solvent comprises at least one dialkyl carbonates of the formula CO(ORₐ)(OR_{b}), each of Rₐ and R_{b} being n-butyl. Hence the at least one dialkyl carbonate is di-n-butylcarbonate, also referred to as DNBC, which may be made using known production techniques.

The lowest flashpoint of each of the ingredients is above 61 deg C, hence the flashpoint of the composition does not exceed 61 deg C.

The emulsification performance of various agrochemical formulation compositions is exemplified by the comparison of the following agrochemical formulation compositions according to the invention.

In the formulations following ingredients are used:
TERMUL® 3640 and TERSPERSE® 2202 are specialty chemicals for agrochemicals, available from Huntsman. TERMUL® 3640 is a blend of anionic & nonionic surfactants, TERSPERSE® 2202 is a tristyrylphenol ethoxylate phosphate derivative. ECOTERIC® T85 is a polyoxyethylene sorbitan trioleate available from Huntsman. NANSA® EVM 70/B is a calcium dedecyl benzene sulphonate available from Huntsman.

A first example of an agrochemical formulation composition is a Trifluralin 600 g/L EC formulation composition, wherein 612 g of the herbicide Trifluralin and 120 g of TERMUL® 3640, being an emulsifier, are combined with such a volume of di-n-butylcarbonate (DNBC) to obtain a 600 g/L EC formulation composition.

A second example of an agrochemical formulation composition is a Tebuconazole 250 g/L EW formulation composition, wherein 250 g of the fungicide Tebuconazole, 72 g of TERSPERSE® 2202 and 30 g ECOTERIC® T85, both emulsifiers, 40 g of propylene glycol, being a humectant, 40 g of N-methylpyrrolidone, 40 g of water, 198 g of dimethyldecanamide, all three functioning as solvents are combined with such a volume of the solvent DNBC, to obtain a 250 g/L EW formulation composition.

A third example of an agrochemical formulation composition is a Pendimethalin 330 g/L EC formulation composition, wherein 351 g of the herbicide Pendimethalin and 80 g of TERMUL® 3150 and 27 g of NANSA® EVM 70/B, both emulsifiers, are combined with such a volume of DNBC to obtain a 330 g/L EC formulation composition.

A fourth example of an agrochemical formulation composition is a Cypermethrin 100 g/L EC formulation composition, wherein 106.7 g of the insecticide Cypermethrin and 87.75 g of TERMUL® 3150 and 29.25 g of NANSA® EVM 70/B, both emulsifiers, are combined with such a volume of di-n-propylcarbonate (DNPC) to obtain a 100 g/L EC formulation composition.

A fifth example of an agrochemical formulation composition is a Metolachlor 650 g/L EC formulation composition, wherein 667 g of the herbicide Metolachlor and 75 g of TERMUL® 3150 and 25 g of NANSA® EVM 70/B, both emulsifiers, are combined with such a volume of di-isobutylcarbonate (DIBC) to obtain a 650 g/L EC formulation composition.

The emulsification performance of these five agrochemical formulation compositions are set out in table I.

**Table I**

| | | | Volume of cream/oil, ml | | | |
|---|---|---|---|---|---|---|
| Example | Bloom | Initial Emusification | 0.5 hr | 2 hrs | 24 hrs | 24.5 hrs |
| 1 | fair/poor | complete | | | | |
| 2 | very good | complete | 0 | trace | 1.0 | 0 |
| 3 | very good | complete | 0 | 0.5 | 1.0 | 0.5 |
| 4 | very good | complete | 0 | 0 | 2.0 | 0 |
| 5 | very good | complete | 0 | trace | 1.0 | 0 |

It is understood that these and other dialkyl carbonates of the formula CO(ORₐ)(OR_{b}), each of Rₐ and R_{b} being a linear or branched alkyl group of 3 to 6 carbon can be used to provide agrochemical formulation compositions. Solubility of some agrochemical ingredients in DNBC and DNPC are set out in tables II and III under.

**Table II: SOLUBILITY OF PESTICIDE ACTIVES IN DNBC SOLVENT AT 20 deg C.**

| active ingredient | grams / litre |
|---|---|
| Trifluralin | >600 |
| Pendimethalin | >300 |
| Ametryn | 350 |
| Cypermethrin | >450 |
| Deltamethrin | 100 |
| Metolachlor | >600 |
| Triadimenol | 45 |
| Epoxiconazole | 45 |
| Diflufenican | <50 |
| Tebuconazole | 140 |

**Table III: SOLUBILITY OF PESTICIDE ACTIVES IN DNPC SOLVENT AT 20 deg C.**

| active ingredient | grams / litre |
|---|---|
| Trifluralin | >600 |
| Pendimethalin | >300 |
| Ametryn | >250 |
| Tebuconazole | >100 |

It is to be understood that although preferred embodiments and/or materials have been discussed for providing embodiments according to the present invention, various modifications or changes may be made without departing from the scope and spirit of this invention.

## Claims

1. An agrochemical formulation composition comprising at least one agrochemical active component and a solvent, which solvent comprises one or more dialkyl carbonates of the formula CO(ORₐ)(OR_{b}), each of Rₐ and R_{b} being a linear or branched alkyl group of 3 to 6 carbon.

2. An agrochemical formulation composition according to claim 1, wherein Rₐ and R_{b} are identical.

3. An agrochemical formulation composition according to any one of the claims 1 to 2, wherein each of Rₐ and R_{b} is a butyl group.

4. An agrochemical formulation composition according to any one of the claims 1 to 3, wherein said solvent provides at least 10 w% of the agrochemical formulation composition.

5. An agrochemical formulation composition according to any one of the claims 1 to 4, wherein the solvent comprises at least one other component different from said one or more dialkyl carbonates of the formula CO(ORₐ)(OR_{b}), each of Rₐ and R_{b} being a linear or branched alkyl group of 3 to 6 carbon.

6. An agrochemical formulation composition according to any one of the claims 1 to 5, wherein the solvent comprises at least two dialkyl carbonates of the formula CO(ORₐ)(OR_{b}), each of Rₐ and R_{b} being a linear or branched alkyl group of 3 to 6 carbon.

7. An agrochemical formulation composition according to any one of the claims 1 to 6, wherein said one or more dialkyl carbonates of the formula CO(ORₐ)(OR_{b}), each of Rₐ and R_{b} being a linear or branched alkyl group of 3 to 6 carbon have a molar mass of less than 250 g/mol.

8. A method to use a agrochemical formulation composition, the method comprises the steps of
o providing an agrochemical formulation composition according to any one of the claims 1 to 7;
o emulsifying said agrochemical formulation composition with water to provide an agrochemical applicable liquid;
o contacting said agrochemical applicable liquid with an agricultural substrate.
